# EUROPEAN PATENT APPLICATION

(11) **EP 2 111 076 A2**
(43) Date of publication of application: **21.10.2009**
(21) Application number: 09005361.2
(22) Date of filing: 15.04.2009
(51) Int. Cl.: H04W 52/02

(54) **Radio terminal, radio base station and radio communication system**

(30) Priority: 15.04.2008 JP 2008106260
(71) Applicant: NTT DoCoMo, Inc., Chiyoda-ku Tokyo 100-6150 (JP)
(72) Inventor: Igarashi, Kei, Tokyo 100-6150 (JP); Yamada, Akira, Tokyo 100-6150 (JP); Loyola, Luis, Tokyo 100-6150 (JP); Aad, Imad, Tokyo 100-6150 (JP); Widmer, Joerg, Tokyo 100-6150 (JP)
(74) Representative: HOFFMANN EITLE

(57) **Abstract**

A radio terminal includes: a controller configured to control switching between a wake-up state in which a radio interface is turned on and a sleep-state in which the radio interface if turned off; a battery configured to accumulate electric power to be supplied to the radio interface; a remaining battery amount acquiring unit configured to acquiring a remaining battery amount being a remaining amount of electric power accumulated in the battery. The controller performs switching from the sleep state to the wake-up state, according to a communication order where own radio terminal performs radio communication. The own-terminal communication order is scheduled based on the remaining battery amount.

## Description

### CROSS REFERENCE TO RELATED APPLICATION

This application is based upon and claims the benefit of priority from prior Japanese Patent Application No.2008-106260, filed on April 15, 2008; the entire contents of which are incorporated herein by reference.

### BACKGROUND OF THE INVENTION

### 1. Field of the Invention

The present invention relates to a radio terminal, a radio base station and a radio communication system. Specifically, the radio communication system includes the radio base station and a plurality of radio terminals and allows radio communications to be performed by using a predetermined radio band, and the radio terminals each includes a radio interface for performing radio communications with the radio base station.

### 2. Description of the Related Art

Conventionally, a radio communication scheme using carrier sense multiple access with collision avoidance (CSMA/CA) has been known to be employed in a radio network including a base station and a plurality of radio terminals.

In general, the order in which the radio terminals transmit their packets is determined randomly. Alternatively, the order in which the radio terminals transmit packets is determined by scheduling in the radio network. A possible scheduling method is time scheduling. In the time scheduling, a tine at which a radio terminal transmits a packet (called transmission time below) is set for each of the radio terminals. By this method, collision probability of packets transmitted by the radio terminals is decreased, so that the radio resource can be effectively used.

Meanwhile, a radio terminal having a power-saving mode to reduce its power consumption is known. In the power saving mode, the power consumed by the radio terminal is reduced by switching from a wake-up state to a sleep state. In the wake-up state, packets can be transmitted and received. In the sleep state, a radio interface in the radio terminal is turned off.

As described above, the time scheduling allows the power consumed by the radio terminal to be reduced effectively because the radio terminal switches from the sleep state to the wake-up state at the transmission time.

Another possible scheduling method is order scheduling. In the order scheduling, orders where radio terminals transmit packets (called a communication order below) are set for the respective radio terminals. In the order scheduling, the radio terminal does not know the exact time to transmit a packet, and accordingly switches from the sleep state to the wake-up state by estimating a time at which the radio terminal itself transmits a packet.

In the above scheduling methods, each of the radio terminals knows neither the time at which each of the other radio terminals starts transmitting a packet (transmission start time) nor the time at which each of the other radio terminals ends transmitting a packet (transmission end time). A transmission time length (time slot length) used by each of the other radio terminals to transmit a packet is variable. Further, each of the other radio terminals might not use the assigned transmission time (time slot).

Against this background, proposed is a function of a radio terminal to queue-jump into a transmission time (time slot) assigned to a different radio terminal (such a function is called a queue-jumping function below). Such a function is able to decrease delay of packets transmitted by the radio terminals.

The following techniques are proposed as a radio communication system implementing the queue jumping function.

In a first techniques, a point coordination function (PCF) which is a communication protocol employed in a wireless LAN communication is defined. A radio base station (access point (AP)) transmits a polling frame to radio terminals included in a polling list. Upon receipt of the polling frame, each radio terminal acquires a right to transmit a packet (transmission right). In PCF, the transmission right can be acquired in a contention free period (CFP) and a contention period (CP), which are repeated cyclically. In CFP, the radio terminal acquires the transmission right with the polling frame. In CP, on the other hand, the radio terminal acquires the transmission right in an autonomous distributed manner.

In a second technique, a communication protocol using quality of service (QoS) based on distributed coordination function (DCF) of IEEE802.11 is defined. Each of the radio terminals monitors the radio communication status of each of the other radio terminals, and determines its own communication order in an autonomous distributed manner. For example, when four radio terminals are already performing radio communication, the communication order of a new radio terminal is five. When an n-th radio terminal does not transmit a packet, an n+1-th radio terminal queue-jumps into a transmission time (time slot) assigned to the n-th radio terminal. For examples of the above techniques, see the following Non-patent Documents: IEEE Standard 802.11, 1999 (R2003) and its amendments, IEEE Press; and I. Aad, P. Hofmann, L. Loyola, J. Wdmer, "Self-organizing 802.11-compatible MAC with Elastic Real-time Scheduling," in proceedings of IEEE MASS 2007, October 2007, Pisa, Italy.

However, in the above first technique, the radio terminal cannot switch from the wake-up state to the sleep state within a period from a start of CFP to an end of packet transmission.

Moreover, in the above second technique, the radio terminal cannot switch from the wake-up state to the sleep state while the plurality of radio terminals are transmitting their packets (during a transmission scheduling period) which is from the start of the period till the end of packet transmission.

Particularly, a radio terminal assigned a larger communication order has a relatively long wake-up state, and accordingly consumes more power. As a result, the battery of such a radio terminal lasts shorter.

### SUMMARY OF THE INVENTION

A radio terminal according to a first aspect of the present invention is in a radio communication system including a radio base station and a plurality of radio terminals. The radio terminal includes: a radio interface configured to allow radio communication with the radio base station; a controller configured to control switching between a wake-up state in which the radio interface is turned on and a sleep-state in which the radio interface is turned off; a battery configured to accumulate electric power to be supplied to the radio interface; and an acquiring unit configured to acquire a remaining battery amount being a remaining amount of electric power accumulated in the battery. The controller performs switching from the sleep state to the wake-up state, according to an own-terminal communication order where the own radio terminal performs radio communication. The own-terminal communication order is scheduled based on the remaining battery amount.

According to the above aspect, the communication order of a radio terminal (own-terminal communication order) is scheduled based on a remaining battery amount. Consequently, a radio terminal having a low amount of remaining battery can be assigned a small communication order. As a result, prevented from running down, the battery of the radio terminal 10 can last longer.

In the first aspect, the acquiring unit acquires a battery level being a quantized value of the remaining battery amount.

In the first aspect, the radio terminal further includes a transmitter configured to broadcast the battery level.

In the first aspect, the transmitter broadcasts the battery level when newly starting radio communication with the radio base station.

In the first aspect, when the battery level changes to a new battery level during radio communication which has been started with the radio base station, the transmitter broadcasts the new battery level.

In the first aspect, the radio terminal further includes: a setting unit configured to set the own-terminal communication order; and a transmitter configured to broadcast the own-terminal communication order.

In the first aspect, the transmitter broadcasts the own-terminal communication order when newly starting radio communication with the radio base station.

In the first aspect, when the own-terminal communication order changes to a new own-terminal communication order during radio communication which has been started with the radio base station, the transmitter broadcasts the new own-terminal communication order.

In the first aspect, the radio terminal further includes a receiver configured to receive a different-terminal communication order where the different radio terminal performs radio communication from a different radio terminal. The setting unit re-sets the own-terminal communication order, based on a result of comparison between the own-terminal communication order and the different-terminal communication order.

In the first aspect, the different radio terminal is a different terminal newly starting radio communication with the radio base station. The setting unit re-sets the own-terminal communication order to a value larger than the current value when the own-terminal communication order is not smaller than the different-terminal communication order.

In the first aspect, the different radio terminal is a different terminal performing radio communication with the radio base station. The setting unit re-sets the own-terminal communication order to a value larger than the current value when the own-terminal communication order is smaller than the different-terminal communication order previously received from the different radio terminal and the own-terminal communication order is not smaller than the different-terminal communication order newly received from the different radio terminal. The setting unit re-sets the own-terminal communication order to a value smaller than the current value when the own-terminal communication order is greater than the different-terminal communication order previously received from the different radio terminal and the own-terminal communication order is not greater than the different-terminal communication order newly received from the different radio terminal.

A radio base station according to a second aspect of the present invention performs radio communication with a plurality of radio terminals each having a radio interface and a battery configured to accumulate electric power to be supplied to the radio interface. The radio base station includes; a receiver configured to receive remaining battery amounts from each of the plurality of radio terminals, each of the remaining battery amounts being a remaining amount of electric power accumulated in the battery; a scheduler configured to set communication orders based on the remaining battery amounts, the communication orders are orders where each of the plurality of radio terminals perform radio communication; and a transmitter configured to transmit the communication orders to the plurality of radio terminals.

A radio terminal according to a third aspect of the present invention is in a radio communication system including a radio base station and a plurality of radio terminals. The radio terminal is any one of the plurality of radio terminals. The radio terminal includes: a radio interface; a battery configured to accumulate electric power to be supplied to the radio interface; a receiver configured to receive remaining battery amounts from the plurality of respective radio terminals, each of the remaining battery amounts being a remaining amount of electric power accumulated in the battery; a scheduler having a scheduling function configured to set communication orders based on the remaining battery amounts, the communication orders indicating an order in which the plurality of respective radio terminals perform radio communication; a transmitter configured to transmit the communication orders to the other radio terminals; an acquiring unit configured to acquire a remaining battery amount of its own terminal being a remaining amount of electric power accumulated in the battery of its own radio terminal; and a turn over unit configured to turn over a scheduling function to a different one of the plurality of radio terminals when its own-terminal remaining battery amount is smaller than a predetermined threshold.

A radio communication system according to a fourth aspect of the present invention includes a radio base station and a plurality of radio terminals each having a radio interface and performing radio communication with the radio base station. The radio communication system includes: a controller configured to control switching between a wake-up state in which the radio interface is turned on and a sleep-state in which the radio interface is turned off; a battery configured to accumulate electric power to be supplied to the radio interface; and an acquiring unit configured to acquire a remaining battery amount being a remaining amount of electric power accumulated in the battery. The controller performs switching from the sleep state to the wake-up state of each of the plurality of radio terminals, according to a communication order of the radio terminal, the communication order being an order where the radio terminal performs radio communication. The communication order is scheduled based on the remaining battery amount.

### BRIEF DESCRIPTION OF THE DRAWINGS

Fig. 1 is a diagram illustrating a radio communication system according to a first embodiment.
Fig. 2 is a block diagram illustrating a radio terminal according to the first embodiment.
Fig. 3 is a block diagram illustrating a radio base station according to the first embodiment.
Fig. 4 is a diagram illustrating an example of scheduling according to the first embodiment.
Fig. 5 is a diagram illustrating the example of scheduling according to the first embodiment.
Fig. 6 is a flowchart illustrating the operation of the radio base station according to the first embodiment.
Fig. 7 is a block diagram illustrating a radio terminal according to s second embodiment.
Fig. 8 is a diagram illustrating an example of scheduling according to the second embodiment.
Fig. 9 is a diagram illustrating the example of scheduling according to the second embodiment.
Fig. 10 is a block diagram illustrating a radio terminal according to a third embodiment.
Fig. 11 is a diagram illustrating an example of scheduling according to the third embodiment.
Fig. 12 is a diagram illustrating the example of scheduling according to the third embodiment.
Fig. 13 is a flowchart illustrating the operation of the radio terminal according to the third embodiment.
Fig. 14 is a flowchart illustrating the operation of the radio terminal according to the third embodiment.

### DESCRIPTION OF THE PREFERRED EMBODIMENTS

With reference to the drawings, descriptions will be given below of radio communication systems according to embodiments of the present invention. Note that the same or similar parts bear the same or similar reference numerals throughout the drawings.

It should be noted that the drawings are schematic, and therefore dimensional proportions or the like in the drawings are different from actual values. Accordingly, specific dimensions and others should be inferred based on the description given below. Moreover, dimensional relationships and dimensional proportions are different from one drawing to another in some parts, of course.

### [First Embodiment]

### (Configuration of Radio Communication System)

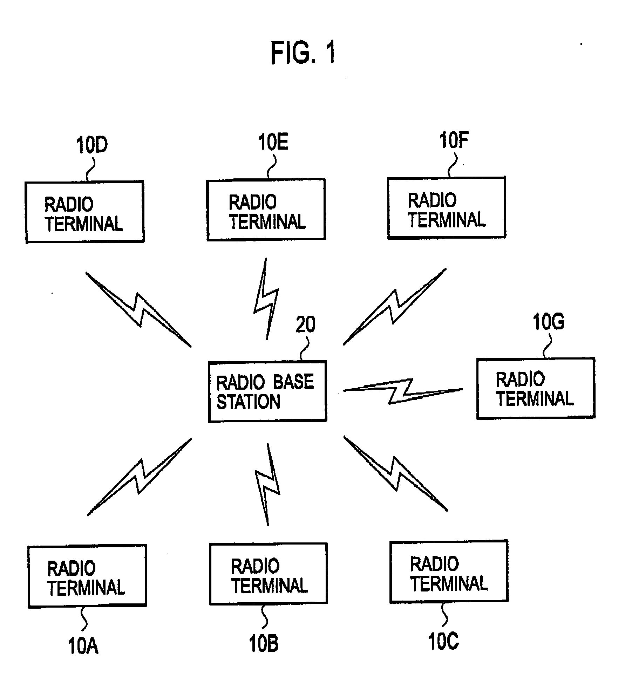

With reference to the drawing, a description will be given below of the configuration of a radio communication system according to a first embodiment. Fig. 1 is a diagram illustrating the radio communication system according to the first embodiment.

As illustrated in Fig. 1, the radio communication system includes a plurality of radio terminals 10 (radio terminals 10A to 10G) and a radio base station 20. In the radio communication system, radio communication is performed using a predetermined radio band. Of course, there can be any number of the radio terminals 10.

The radio communication system is, for example, a wireless LAN communication system or the like. The radio communication system employs a radio communication scheme using, for example, carrier sense multiple access with collision avoidance (CSMA/CA).

The radio terminal 10 is a terminal constituting of a CPU, a ROM, a RAM, and others. The radio terminal 10 is a mobile terminal, a PDA, or the like, and has a function of performing radio communication with the radio base station 20.

The radio base station 20 is a device constituting of a CPU, a ROM, a RAM, and others. The radio base station 20 has a function of performing radio communication with the radio terminal 10.

### (Configuration of Radio Terminal)

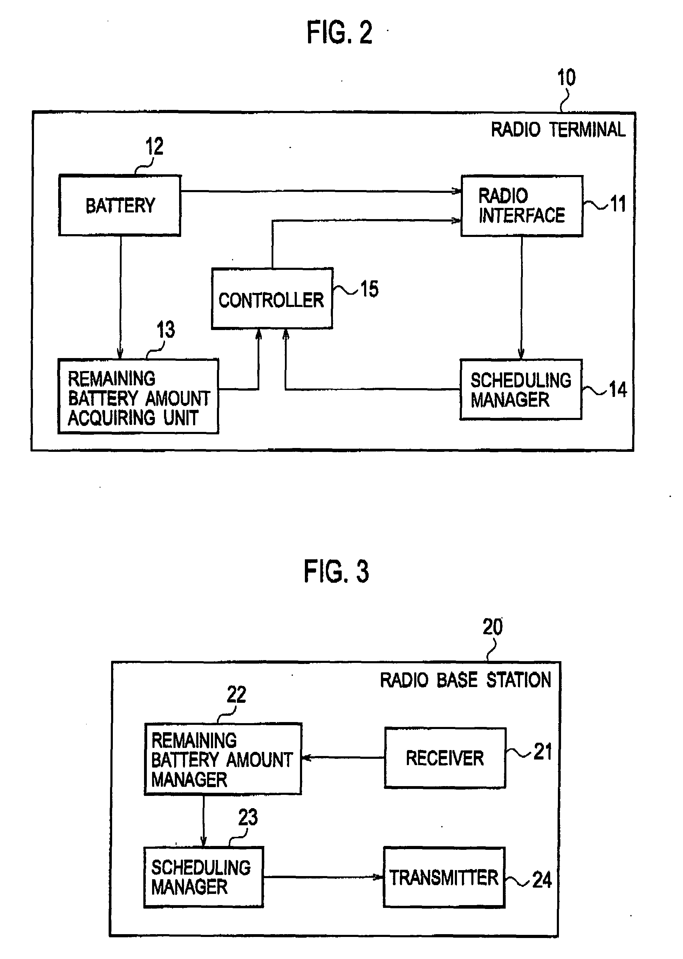

With reference to the drawing, a description will be given below of the configuration of the radio terminal according to the first embodiment. Fig. 2 is a block diagram illustrating the radio terminal 10 according to the first embodiment.

As illustrated in Fig. 2, the radio terminal 10 includes a radio interface 11, a battery 12, a remaining battery amount acquiring unit 13, a scheduling manager 14, and a controller 15.

The radio interface 11 performs radio communication with the radio base station 20. Specifically, the radio interface 11 performs operation such as transmission and reception of radio waves. Radio waves received by the radio interface 11 include radio waves for not only for its own radio terminal 10, but also for other radio terminals 10.

Stales of the radio interface 11 include a wake-up state and a sleep state. In the wake-up state, the radio interface 11 is turned on. In the sleep state, the radio interface 11 is turned off.

For example, the radio interface 11 transmits a packet including remaining battery amount data, which is described later, to the radio base station 20. The radio interface 11 may broadcast the packet including remaining battery amount data. Further, the radio interface 11 transmits a packet including user data to the radio base station 20.

The radio interface 11 receives a packet including scheduling information from the radio base station 20. The radio interface 11 may alternatively receive a beacon including scheduling information from the radio base station 20. The beacon is transmitted from the radio base station 20 to the radio terminal 10 at a predetermined cycle. Further, the radio interface 11 receives a packet including user data from the radio base station 20.

The scheduling information includes the orders of the radio terminals 10 where the terminals 10 perform radio communication in a period when the plurality of radio terminals 10 perform radio communication. In the following, the order and the period described above are called a communication order and a radio communication cycle, respectively. The radio communication cycle is repeated at a predetermined cycle.

The battery 12 accumulates electric power to be supplied to the radio interface 11. The battery 12 is, for example, a secondary battery such as a lithium-ion battery.

The remaining battery amount acquiring unit 13 acquires a remaining amount of electric power accumulated in the battery 12 (such an amount is called a remaining battery amount below). The remaining battery amount acquiring unit 13 may quantize the remaining battery amount into values in a predetermined range (e.g., integers from 1 to 4). Values obtained by quantizing the remaining battery amount are referred to as battery levels below.

The scheduling manager 14 manages the scheduling information received from the radio base station 20. Specifically, the scheduling manager 14 manages a communication order assigned to its own radio terminal 10 in the radio communication cycle.

The controller 15 performs overall control of the operation of the radio terminal 10. For example, the controller 15 performs operations such as setting a radio parameter used in the radio communication. In addition, the controller 15 instructs the radio interface 11 to transmit remaining battery amount data indicating an amount of remaining battery (which is a battery level in the first embodiment) and user data.

To be more precise, the controller 15 instructs the radio interface 11 to transmit the remaining battery amount data when newly starting radio communication with the radio base station 20. Then, the radio interface 11 transmits a packet including the remaining battery amount data to the radio base station 20. The radio interface 11 may broadcast the packet including the remaining battery amount data.

When the battery level of its own radio terminal 10 has changed to a new battery level, the controller 15 instructs the radio interface 11 to transmit remaining battery amount data indicating the new battery level. Then, the radio interface 11 transmits a packet including the remaining battery amount data to the radio base station 20. The radio interface 11 may broadcast the packet including the remaining battery amount data.

Based on the scheduling information managed by the scheduling manager 14, the controller 15 instructs the radio interface 11 to transmit a packet including user data. The controller 15 controls switching between the sleep state and the wake-up state. Specifically, the controller 15 performs switches from the sleep state to the wake-up state at a start point in the radio communication cycle. Upon completion of packet transmission in the radio communication cycle, the controller 15 performs switches from the wake-up state to the sleep state.

### (Configuration of Radio Base Station)

With reference to the drawing, a description will be given below of the configuration of the radio base station according to the first embodiment. Fig. 3 in a diagram illustrating the radio base station 20 according to the first embodiment.

As illustrated in Fig. 3, the radio base station 20 includes a receiver 21, a remaining battery amount manager 22, a scheduling manager 28, and a transmitter 24.

The receiver 21 receives radio waves from each of the radio terminals 10. Specifically, the receiver 21 receives packets from each of the radio terminals 10. Packets received from each radio terminal 10 include a packet including the remaining battery amount data, a packet including the user data, and the like.

Based on the remaining battery amount data received, the remaining battery amount manager 22 manages the remaining battery amount of each of the radio terminals 10. In the first embodiment, the remaining battery amount manager 22 manages the battery level of each of the radio terminals 10. For example, the remaining battery amount manager 22 has a table in which identifiers of the radio terminals 10 are associated with the battery levels of the radio terminals 10, respectively.

The scheduling manager 23 determines the communication orders of the respective radio terminals 10. Specifically, the scheduling manager 23 determines the communication orders of the radio terminals 10, based on their battery levels managed by the remaining battery amount manager 22. For example, the scheduling manager 23 assigns the radio terminal 10 having a lower battery level a smaller communication order.

The transmitter 24 transmits radio waves to each of the radio terminals 10. Specifically, the transmitter 24 transmits a packet including scheduling information to each of the radio terminals 10. The transmitter 24 may alternatively transmit a beacon including the scheduling information to each of the radio terminals 10. The beacon is transmitted from the radio base station 20 to the radio terminal 10 at a predetermined cycle. The transmitter 24 transmits a packet including user data to each of the radio terminals 10.

It should be noted that the scheduling information includes the communication orders of the radio terminals 10, which are set by the scheduling manager 23.

### (Example of Scheduling)

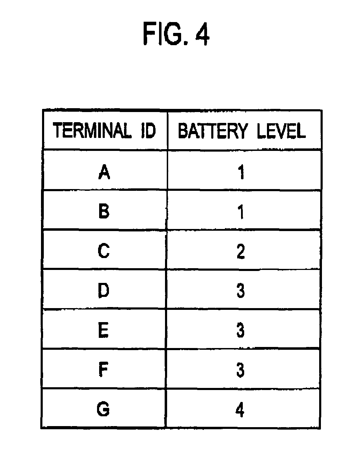

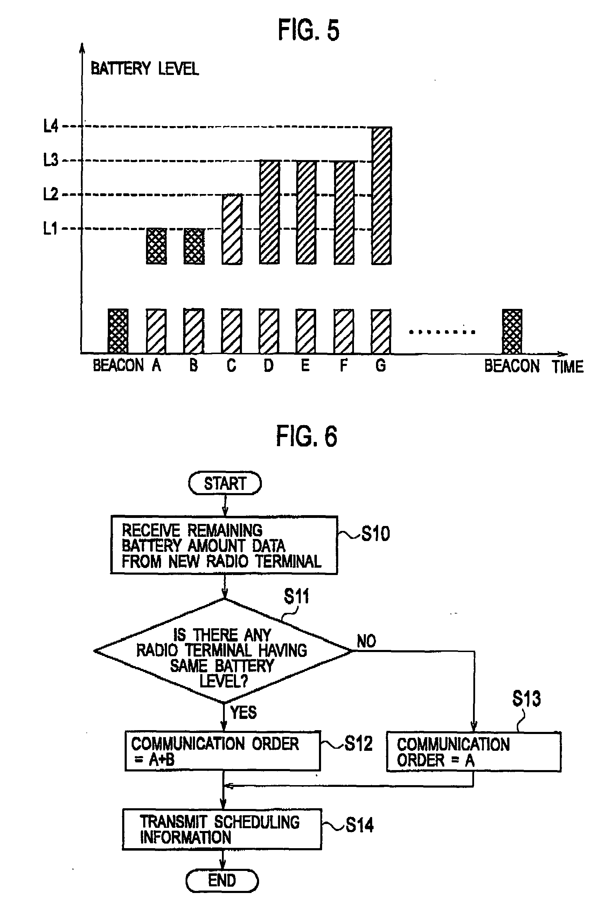

With reference to the drawings, a description will be given below of an example of scheduling according to the first embodiment. Figs. 4 and 5 are diagrams illustrating the example of scheduling according to the first embodiment.

Here, consider a case where the radio terminal 10G newly starts radio communication with the radio base station 20, with the radio terminals 10A to 10F already performing radio communication with the radio base station 20. In other words, the radio terminals 10A to 10F have established association with the radio base station 20 and are already connected to the radio base station 20. On the other hand, the radio terminal 10G has established association with the radio base station 20, but has not connected to the radio base station 20 yet.

Assume that the battery levels of the radio terminals 10 managed by the radio base station 20 are as shown in Fig. 4. Specifically, the battery levels of the radio terminals 10A and 10B are "1." The battery level of the radio terminal 10C is "2." The battery levels of the radio terminals 10D to 10F are "3." The battery level of the radio terminal 10G is "4."

The radio base station 20 compares the battery levels of the existing radio terminals 10 (i.e., the radio terminals 10A to 10F) with the battery level of the new radio terminal 10 (i.e., radio terminal 10G). Then, the radio base station 20 schedules the radio terminal 10 having a higher battery level after the radio terminal 10 having a lower battery level. In other words, the radio base station 20 assigns the radio terminal 10 having a lower battery level a smaller communication order.

Accordingly, as illustrated in Fig. 5, the communication order is such that the new radio terminal 10 (radio terminal 10G) comes after the existing radio terminals 10 (radio terminals 10A to 10F).

### (Operation of Radio Base Station)

With reference to the drawing, a description will be given below of the operation of the radio base station according to the first embodiment. Fig. 6 is a flowchart illustrating the operation of the radio base station 20 according to the first embodiment.

As illustrated in Fig. 6, in Step 10, the radio base station 20 receives remaining battery amount data from a new radio terminal 10 (which is the radio terminal 10G in the above example).

In Step 11, the radio base station 20 determines whether or not there is any radio terminal 10 having the same battery level as the new radio terminal 10, among the existing radio terminals 10 (i.e., the radio terminals 10A to 10F in the above-mentioned example). When there is any radio terminal 10 having the same battery level as the new radio terminal 10, the radio base station 20 proceeds to processing in Step 12. When there is no radio terminal 10 having the same battery level as the new radio terminal 10, the radio base station 20 proceeds to processing in Step 13.

In Step 12, the radio base station 20 sets the communication order of the new radio terminal 10. Specifically, the communication order is equal to a total of the number (A) of the radio terminals 10 having a battery level smaller than the new radio terminal 10 and the number (B) of the radio terminals 10 having the same battery level as the new radio terminal 10.

In Step 13, the radio base station 20 sets the communication order of the new radio terminal 10. Specifically, the communication order is equal to the number (A) of the radio terminals 10 having a battery level smaller than the new radio terminal 10.

In Step 14, the radio base station 20 transmits scheduling information having the communication orders of the radio terminals 10 to each of the radio terminals 10. Specifically, the radio base station 20 transmits a packet including the scheduling information to each of the radio terminals 10. The radio base station 20 may alternatively transmit a beacon including the scheduling information to each of the radio terminals 10.

### (Advantageous Effects)

In the first embodiment, each of the radio terminals 10 transmits remaining battery amount data indicating its own-terminal battery level to the radio base station 20. Then, the radio base station 20 performs scheduling of the communication orders so that the radio terminals 10 having a low battery level may be assigned a small communication order. Accordingly, prevented from running down, the battery of the radio terminal 10 can last longer.

### [Second Embodiment]

With reference to the drawings, a description will be given below as to a second embodiment. The following mainly describes differences between the first embodiment and the second embodiment.

Specifically, the radio base station 20 performs the communication order scheduling in the first embodiment. In contrast, a representative radio terminal being one of the plurality of radio terminals 10 performs the communication order scheduling in the second embodiment.

It should be noted that the radio terminals 10 other than the representative radio terminal have the same configuration as that described in the first embodiment, except that each of the radio terminals 10 other than the representative radio terminal transmits the remaining battery amount data to the representative radio terminal.

Each of the radio terminals 10 other than the representative radio terminal may transmit remaining battery amount data directly to the representative radio terminal. Alternatively, each of the radio terminals 10 other than the representative radio terminal may transmit the remaining battery amount data to the representative radio terminal via the radio base station 20.

### (Configuration of Representative Radio Terminal)

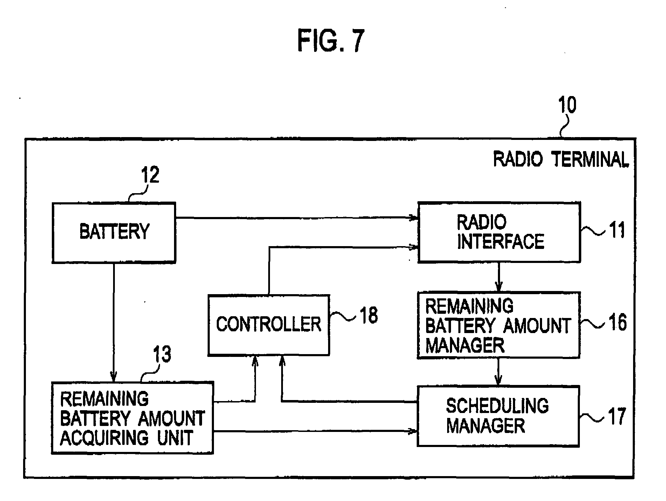

With reference to the drawing, a description will be given of the configuration of the representative radio terminal according to the second embodiment. Fig. 7 is a block diagram illustrating the radio terminal 10 (representative radio terminal) according to the second embodiment. Note that, in Fig. 7, the same configurations as in Fig. 2 bear the same reference numerals.

As illustrated in Fig. 7, the representative radio terminal includes a remaining battery amount manager 16, a scheduling manager 17, and a controller 18, in place of the scheduling manager 14 and the controller 15.

The remaining battery amount manager 16 manages the remaining battery amount of each of the radio terminals 10. In the second embodiment, what the remaining battery amount manager 16 manages is the battery level of each of the radio terminals 10. For example, the remaining battery amount manager 16 has a table in which identifiers of the radio terminals 10 are associated with the battery levels of the radio terminals 10, respectively.

The remaining battery amount manager 16 acquires the battery levels of the radio terminals 10 other than the representative radio terminal, based on remaining battery amount data sets received from the respective radio terminals 10 other than the representative radio terminal. Meanwhile, the remaining battery amount manager 16 acquires the battery level of its own representative radio terminal, which is acquired by the remaining battery amount acquiring unit 13.

The scheduling manager 17 determines the communication orders of the respective radio terminals 10. Specifically, the scheduling manager 17 determines the communication orders of the respective radio terminals 10, based on their battery levels managed by the remaining battery amount manager 16. For example, the scheduling manager 17 assigns the radio terminal 10 having a lower battery level a smaller communication order.

The controller 18 performs overall control of the operation of the representative radio terminal. For example, the controller 18 performs operations such as setting a radio parameter used in the radio communication. In addition, the controller 18 instructs the radio interface 11 to transmit scheduling information. A packet including the scheduling information is broadcast to each of the radio terminals 10. Note that the scheduling information includes the communication order set by the scheduling manager 17. The controller 18 instructs the radio interface 11 to transmit user data.

When the battery level acquired by the remaining battery amount acquiring unit 13 is lower than a predetermined threshold, the controller 18 hands over its scheduling function of determining the communication order of the radio terminals 10 to a different one of the radio terminals 10. Specifically, the controller 18 selects a different one of the radio terminals 10 to turn over the scheduling function to, and notifies the selected radio terminal 10 of the schedule function turn over.

Alternatively, the scheduling function may be handed over to the radio terminal 10 expressing intent to function as a representative radio terminal. In such a case, each of the radio terminals 10 notifies the representative radio terminal of whether having intent to function as a representative radio terminal or not. Also, the scheduling function may be handed over to the radio terminal 10 having the highest battery level. Moreover, the scheduling function may be handed over to the radio terminal 10 selected as having the highest battery level from among the radio terminals 10 expressing intent to function as a representative radio terminal.

### (Example of Scheduling)

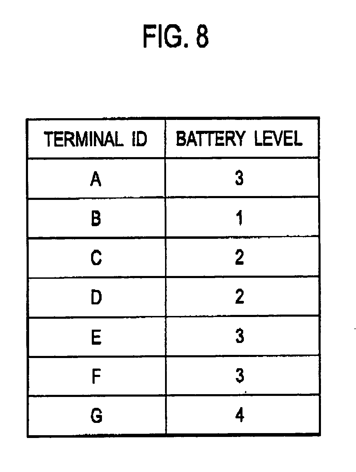

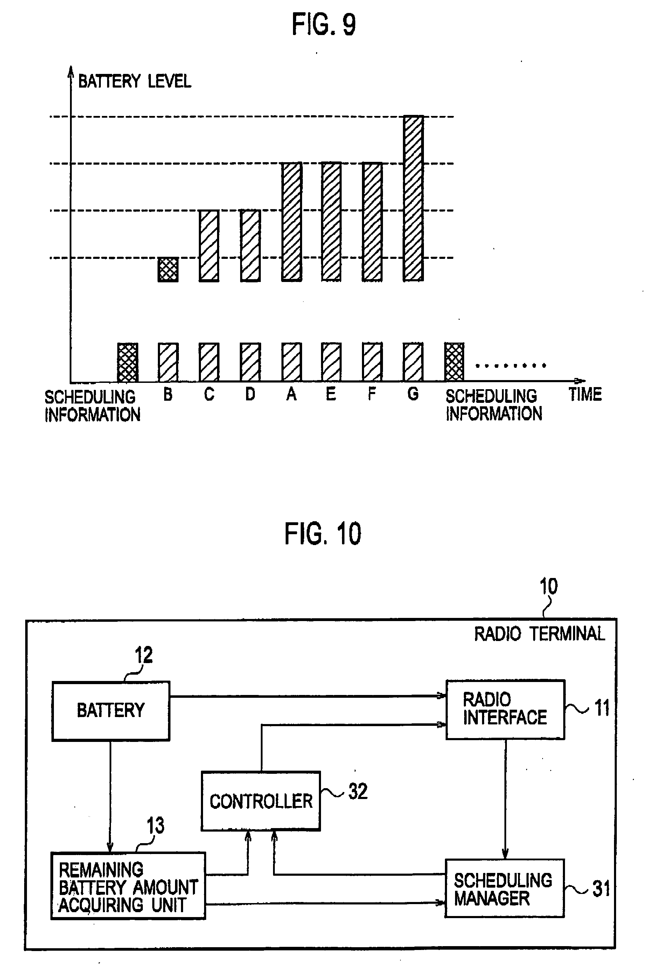

With reference to the drawings, a description will be given below of an example of scheduling according to the second embodiment. Figs. 8 and 9 are diagrams illustrating the example of scheduling according to the second embodiment.

Consider a case where the radio terminal 10A is the representative radio terminal. Further, in the case, consider a case where the radio terminal 10G newly starts radio communication with the radio base station 20, with the radio terminals 10A to 10F already performing radio communication with the radio base station 20. In other words, the radio terminals 10A to 10F have established association with the radio base station 20 and are already connected to the radio base station 20. On the other hand, the radio terminal 10G has established association with the radio base station 20, but has not connected to the radio base station 20 yet.

Assume that the battery levels of the radio terminals 10 managed by the radio terminal 10A (representative radio terminal) are as shown in Fig. 8. Specifically, the battery level of the radio terminal 10A is "3." The battery level of the radio terminal 10B is "1." The battery levels of the radio terminals 10C and 10D are "2." The battery levels of the radio terminals 10E and 10F are "3." The battery level of the radio terminal 10G is "4."

The radio terminal 10A (representative radio terminal) compares the battery levels of the existing radio terminals 10 (i.e., the radio terminals 10A to 10F) with the battery level of the new radio terminal 10 (i.e., radio terminal 10G). Then, the radio terminal 10A (representative radio terminal) schedules the radio terminal 10 having a higher battery level after the radio terminal 10 having a lower battery level. In other words, the radio terminal 10A (representative radio terminal) assigns the radio terminal 10 having a lower battery level a smaller communication order.

Accordingly, as illustrated in Fig. 9, the communication order is such that the new radio terminal 10 (radio terminal 10G) comes after the existing radio terminals 10 (radio terminals 10A to 10F).

### (Advantageous Effects)

In the second embodiment, each of the radio terminals 10 other than the representative radio terminal transmits the remaining battery amount data indicating its own-terminal battery level to the representative radio terminal. Then, the representative radio terminal performs communication order scheduling such that the radio terminal 10 having a low battery level may be assigned a small communication order. Accordingly, prevented from running down, the battery of the radio terminal 10 can last longer.

Moreover, in the second embodiment, the representative radio terminal hands over its scheduling function of determining the communication order of the radio terminals 10 to a different one of the radio terminals 10 when the battery level of the representative radio terminal is lower than the predetermined threshold. This can prevent the scheduling function from being stopped by the battery of the representative radio terminal running down.

### [Third Embodiment]

With reference to the drawings, a description will be given below as to a third embodiment. The following mainly describes differences between the first embodiment and the third embodiment.

Specifically, the radio base station 20 performs the communication order scheduling in the first embodiment. In contrast, each of the radio terminals 10 performs the communication order scheduling in an autonomous distributed manner in the third embodiment.

Each of the radio terminals 10 broadcasts an order of its own terminal for performing communication (hereinafter called an own-terminal communication order), instead of the remaining battery amount data. Accordingly, each of the radio terminals 10 receives an order of each of the other different radio terminals where they perform communication (different-terminal communication order). The own-terminal communication order and the different-terminal communication order are set based on the battery levels of the radio terminals 10.

### (Configuration of Radio Terminal)

With reference to the drawing, a description will be given of the configuration of the radio terminal according to the third embodiment. Fig. 10 is a block diagram illustrating the radio terminal 10 according to the third embodiment. Note that, in Fig. 10, the same configurations as in Fig. 2 bear the same reference numerals.

As illustrated in Fig. 10, the radio terminal 10 includes a scheduling manager 31 and a controller 32, in place of the scheduling manager 14 and the controller 15.

The scheduling manager 31 sets an own-terminal communication order where its own radio terminal 10 performs radio communication. Specifically, the scheduling manager 31 sets the own-terminal communication order, based on a battery level acquired by the remaining battery amount acquiring unit 13.

The scheduling manager 31 re-sets the own-terminal communication order, based on a result of comparison between the own-terminal communication order and a different-terminal communication order.

Firstly, consider a case of receiving a different-terminal communication order (p) from a different one of the radio terminals 10 which newly starts radio communication with the radio base station 20.

The scheduling manager 31 re-sets the own-terminal communication order to a value larger than the current value when the own-terminal communication order is not smaller than the different-terminal communication order (p). Specifically, the scheduling manager 31 increments the own-terminal communication order by one. In other words, when the battery level of its own radio terminal 10 is greater than the battery level of the different radio terminal 10, the scheduling manager 31 increments the own-terminal communication order by one.

Secondly, consider a case of receiving a different-terminal communication order (q) from a different one of the radio terminals 10 which has already been performing radio communication with the radio base station 20.

The scheduling manager 31 re-sets the own-terminal communication order to a value larger than the current value when the own-terminal communication order is smaller than a different-terminal communication order (old_q) having already been received from the different radio terminal 10, and is not smaller than the different-terminal communication order (q) newly received from the different radio terminal 10. Specifically, the scheduling manager 31 increments the own-terminal communication order by one. In other words, when the battery level of the different radio terminal 10 falls short of the battery level of its own radio terminal 10, the scheduling manager 31 increments the own-terminal communication order by one.

The scheduling manager 31 re-sets the own-terminal communication order to a value smaller than the current value when the own-terminal communication order is greater than the different-terminal communication order (old_q) having already been received from the different radio terminal 10, and is not greater than the different-terminal communication order (q) newly received from the different radio terminal 10. Specifically, the scheduling manager 31 decrements the own-terminal communication order by one. In other words, when the battery level of the different radio terminal 10 exceeds the battery level of its own radio terminal 10, the scheduling manager 31 decrements the own-terminal communication order by one.

The controller 32 performs overall control of the operation of the radio terminal 10. For example, the controller 32 performs operation such as setting a radio parameter used in the radio communication. In addition, the controller 32 instructs the radio interface 11 to transmit the own-terminal communication order and user data.

To be more precise, the controller 32 instructs the radio interface 11 to transmit the own-terminal communication order when newly starting radio communication with the radio base station 20. Then, the radio interface 11 transmits a packet including the own-terminal communication order to the plurality of other radio terminals 10. The radio interface 11 may alternatively transmit the packet including the own-terminal communication order to the plurality of other radio terminals 10 via the radio base station 20. The radio interface 11 may broadcast the packet including the own-terminal communication order.

When the own-terminal communication order has changed to a new own-terminal communication order, the controller 32 instructs the radio interface 11 to transmit the new own-terminal communication order. In other words, the controller 32 instructs the radio interface 11 to transmit the new own-terminal communication order when the battery level of its own radio terminal 10 has changed to a new battery level. Then, the radio interface 11 transmits a packet including the own-terminal communication order to the plurality of other radio terminals 10. The radio interface 11 may alternatively transmit the packet including the own-terminal communication order to the plurality of other radio terminals 10 via the radio base station 20. The radio interface 11 may broadcast the packet including the own-terminal communication order.

Based on the own-terminal communication order set by the scheduling manager 31, the controller 32 instructs the radio interface 11 to transmit a packet including user data. The controller 32 controls switching between the sleep state and the wake-up state. Specifically, the controller 32 performs switching from the sleep state to the wake-up state at a start point in the radio communication cycle. Upon completion of packet transmission in the radio communication cycle, the controller 32 performs switching from the wake-up state to the sleep state.

### (Example of Scheduling)

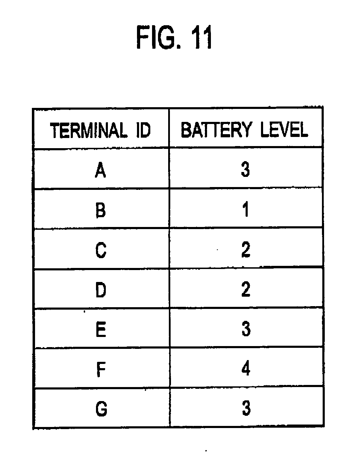

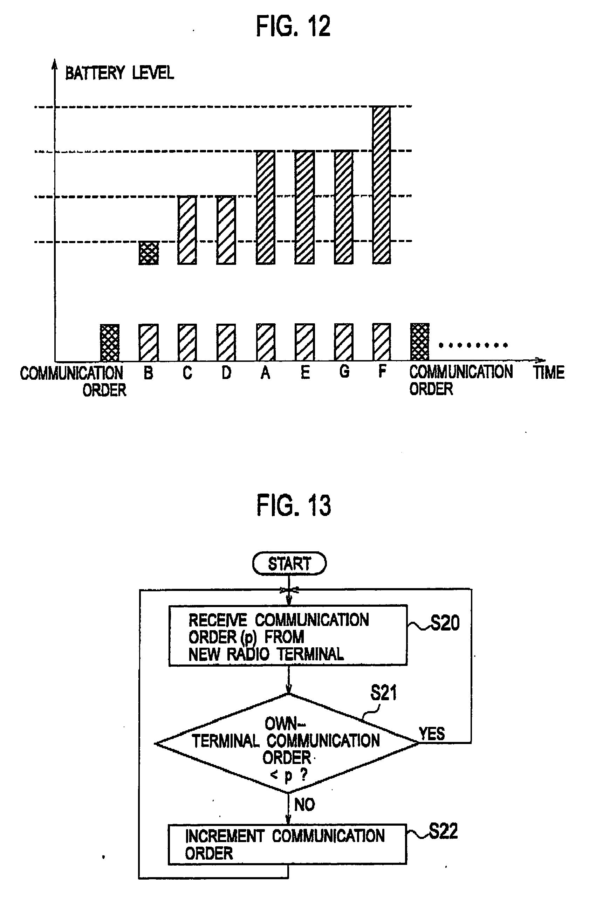

With reference to the drawings, a description will be given below of an example of scheduling according to the third embodiment. Figs. 11 and 12 are diagrams illustrating the example of scheduling according to the third embodiment.

Here, consider a case where the radio terminal 10G newly starts radio communication with the radio base station 20, with the radio terminals 10A to 10F already performing radio communication with the radio base station 20. In other words, the radio terminals 10A to 10F have established association with the radio base station 20 and are already connected to the radio base station 20. On the other hand, the radio terminal 10G has established association with the radio base station 20, but has not connected to the radio base station 20 yet.

The radio terminal 10G acquires the battery level of each of the other radio terminals 10 (i.e., radio terminals 10A to 10F) from them. Assume that the battery levels of the radio terminals 10 are as shown in Fig. 11. Specifically, the battery level of the radio terminal 10A is "3." The battery level of the radio terminal 10B is "1." The battery levels of the radio terminals-10C and 10D are "2." The battery level of the radio terminal 10E is "3." The battery level of the radio terminal 10F is "4." The battery level of the radio terminal 10G is "3."

The radio terminal 10G compares the battery levels of the other radio terminals 10 (i.e., the radio terminals 10A to 10F) with the battery level of its own radio terminal 10 (i.e., radio terminal 10G). Then, the radio terminal 10G sets the own-terminal communication order, according to the criterion that the radio terminal 10 having a low battery level should be assigned a small communication order. Specifically, as illustrated in Fig. 12, the communication order of the radio terminal 10G is six. The radio terminal 10G broadcasts a packet including the own-terminal communication order. The other radio terminals 10 (radio terminals 10A to 10F) re-set their own communication orders, according to the communication order of the radio terminal 10G.

### (Operation of Radio Terminal)

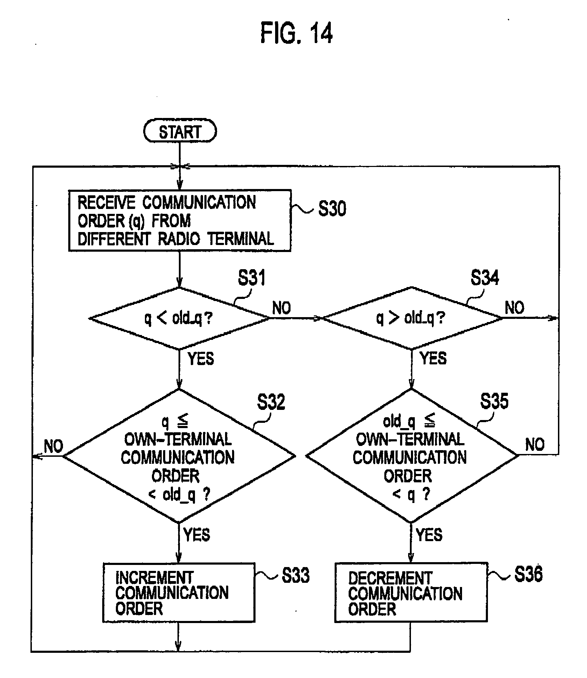

With reference to the drawings, a description will be given below of the operation of the radio terminal according to the third embodiment. Figs. 13 and 14 are flowcharts illustrating the operation of the radio terminal 10 according to the third embodiment.

Firstly, described is a case of receiving a different-terminal communication order (p) from a different one of the radio terminals 10 which newly starts radio communication with the radio base station 20.

As illustrated in Fig. 13, in Step 20, a certain one of the radio terminals 10 receives a different-terminal communication order (p) from a different one of the radio terminals 10 which newly starts radio communication with the radio base station 20.

In Step 21, the radio terminal 10 compares the own-terminal communication order with the different-terminal communication order (p). When the own-terminal communication order is smaller than the different-terminal communication order (p), the radio terminal 10 switches to a state of waiting for another different-terminal communication order (p). On the other hand, when the own-terminal communication order is not smaller than the different-terminal communication order (p), the radio terminal 10 proceeds to processing in Step 22.

In Step 22, the radio terminal 10 re-sets the own-terminal communication order to a value larger than the current value. Specifically, the radio terminal 10 increments the own-terminal communication order by one.

Secondly, described is a case of receiving a communication order (q) from a different one of the radio terminals 10 which has been started radio communication with the radio base station 20.

As illustrated in Fig. 14, in Step 30, a certain one of the radio terminals 10 newly receives a different-terminal communication order (q) from a different one of the radio terminals 10 which has been started radio communication with the radio base station 20.

In Step 31, the radio terminal 10 compares the different-terminal communication order (q) with the different-terminal communication order (old_q). When the different-terminal communication order (q) is smaller than the different-terminal communication order (old_q), the radio terminal 10 proceeds to processing in Step 32. On the other hand, when the different-terminal communication order (q) is not smaller than the different-terminal communication order (old_q), the radio terminal 10 proceeds to processing in Step 34.

Note that the different-terminal communication order (old_q) is a communication order previously received from the different terminal 10.

In Step 32, the radio terminal 10 determines if the own-terminal communication order is smaller than the different-terminal communication order (old_q), and is not smaller than the different-terminal communication order (q). When the above conditions are met, the radio terminal 10 proceeds to processing in Step 33. On the other hand, when the above conditions are not met, the radio terminal 10 switches to a state of waiting a communication order of another terminal.

In Step 33, the radio terminal 10 re-sets the own-terminal communication order to a value larger than the current value. Specifically, the radio terminal 10 increments the own-terminal communication order by one.

In Step 34, the radio terminal 10 compares the different-terminal communication order (q) with the different-terminal communication order (old_q). When the different-terminal communication order (q) is greater than the different-terminal communication order (old_q), the radio terminal 10 proceeds to processing in Step 35. On the other hand, when the different-terminal communication order (q) is not greater than the different-terminal communication order (old_q), the radio terminal 10 switches to a state of waiting for another different-terminal communication order.

In Step 35, the radio terminal 10 determines whether or not the own-terminal communication order is greater than the different-terminal communication order (old_q), and not greater than the different-terminal communication order (q). When the above conditions are met, the radio terminal 10 proceeds to processing in Step 36. On the other hand, when the above conditions are not met, the radio terminal 10 switches to a state of waiting for another different-terminal communication order.

In Step 36, the radio terminal 10 re-sets the own-terminal communication order to a value smaller than the current value. Specifically, the radio terminal 10 decrements the own-terminal communication order by one.

### (Advantageous Effects)

In the third embodiment, each of the radio terminals 10 sets an order of its own terminal for performing communication (the own-terminal communication order), based on a battery level, and then transmits the own-terminal communication order to the plurality of other radio terminals 10. Then, each of the other radio terminals 10 re-sets the own-terminal communication order, based on a result of comparison between the own-terminal communication order and the different-terminal communication order thus received. Accordingly, the radio terminal 10 having a low battery level can be assigned a small communication order. As a result, prevented from running down, the battery of the radio terminal 10 can last longer.

### [Other Embodiments]

The present invention has been described above using the above-described embodiments. However, it should be understood that descriptions and drawings constituting part of the disclosure do not limit the present invention. The present disclosure will make various alternative embodiments, examples, and operational techniques apparent to those skilled in the art.

In the third embodiment described above, each of the radio terminals 10 transmits a communication order of its own terminal to the plurality of other radio terminals 10. However, information transmitted by each of the radio terminals 10 is not limited to the communication order. Specifically, each of the radio terminals 10 may transmit a battery level of its own terminal to the plurality of other radio terminals 10. Then, each of the other radio terminals 10 may re-set the own-terminal communication order, based on a result of comparison between its own-terminal battery level and the battery level of that different radio terminal 10 thus received.

## Claims

1. A radio terminal in a radio communication system including a radio base station and a plurality of radio terminals, the radio terminal comprising:
a radio interface configured to allow radio communication with the radio base station;
a controller configured to control switching between a wake-up state in which the radio interface is turned on and a sleep-state in which the radio interface is turned off;
a battery configured to accumulate electric power to be supplied to the radio interface; and
an acquiring unit configured to acquire a remaining battery amount being a remaining amount of electric power accumulated in the battery, wherein
the controller performs switching from the sleep state to the wake-up state, according to an own-terminal communication order where the own radio terminal performs radio communication, and
the own-terminal communication order is scheduled based on the remaining battery amount.

2. The radio terminal according to claim 1, wherein
the acquiring unit acquires a battery level being a quantized value of the remaining battery amount.

3. The radio terminal according to claim 2, further comprising a transmitter configured to broadcast the battery level.

4. The radio terminal according to claim 3, wherein
the transmitter broadcasts the battery level when newly starting radio communication with the radio base station.

5. The radio terminal according to claim 3, wherein
when the battery level changes to a new battery level during radio communication which has been started with the radio base station, the transmitter broadcasts the new battery level.

6. The radio terminal according to claim 2, further comprising:
a setting unit configured to set the own-terminal communication order based on the battery level; and
a transmitter configured to broadcast the own-terminal communication order.

7. The radio terminal according to claim 6, wherein
the transmitter broadcasts the own-terminal communication order when newly starting radio communication with the radio base station.

8. The radio terminal according to claim 6, wherein
when the own-terminal communication order changes to a new own-terminal communication order during radio communication which has been started with the radio base station, the transmitter broadcasts the new own-terminal communication order.

9. The radio terminal according to claim 6, further comprising a receiver configured to receive a different-terminal communication order where the different radio terminal performs radio communication from a different radio terminal, wherein
the setting unit re-sets the own-terminal communication order, based on a result of comparison between the own-terminal communication order and the different-terminal communication order.

10. The radio terminal according to claim 9, wherein
the different radio terminal is a different terminal newly starting radio communication with the radio base station, and
the setting unit re-sets the own-terminal communication order to a value larger than a current value when the own-terminal communication order is not smaller than the different-terminal communication order.

11. The radio terminal according to claim 9, wherein
the different radio terminal is a different terminal having been started radio communication with the radio base station,
the setting unit re-sets the own-terminal communication order to a value larger than the current value, when the own-terminal communication order is smaller than the different-terminal communication order previously received from the different radio terminal and the own-terminal communication order is not smaller than the different-terminal communication order newly received from the different radio terminal, and
the setting unit re-sets the own-terminal communication order to a value smaller than the current value when the own-terminal communication order is greater than the different-terminal communication order previously received from the different radio terminal and the own-terminal communication order is not greater than the different-terminal communication order newly received from the different radio terminal.

12. A radio base station configured to perform radio communication with a plurality of radio terminals each having a radio interface and a battery configured to accumulate electric power to be supplied to the radio interface, the radio base station comprising:
a receiver configured to receive remaining battery amounts from each of the plurality of radio terminals, each of the remaining battery amounts being a remaining amount of electric power accumulated in the battery;
a scheduler configured to set communication orders based on the remaining battery amounts, the communication orders are orders where each of the plurality of respective radio terminals perform radio communication; and
a transmitter configured to transmit the communication orders to the plurality of radio terminals.

13. A radio terminal in a radio communication system including a radio base station and a plurality of radio terminals, the radio terminal being any one of the plurality of radio terminals, the radio terminal comprising:
a radio interface;
a battery configured to accumulate electric power to be supplied to the radio interface;
a receiver configured to receive remaining battery amounts from each of the plurality of radio terminals, each of the remaining battery amounts being a remaining amount of electric power accumulated in the battery;
a scheduler having a scheduling function configured to set communication orders based on the remaining battery amounts, the communication orders indicating an order in which the plurality of respective radio terminals perform radio communication;
a transmitter configured to transmit the communication orders to the other radio terminals;
an acquiring unit configured to acquire a remaining battery amount of its own terminal being a remaining amount of electric power accumulated in the battery of its own radio terminal; and
a turn over unit configured to turn over the scheduling function to a different one of the plurality of radio terminals when its own-terminal remaining battery amount is smaller than a predetermined threshold.

14. A radio communication system including a radio base station and a plurality of radio terminals each having a radio interface and performing radio communication with the radio base station, the radio communication system comprising:
a controller configured to control switching between a wake-up state in which the radio interface is turned on and a sleep-state in which the radio interface is turned off;
a battery configured to accumulate electric power to be supplied to the radio interface; and
an acquiring unit configured to acquire a remaining battery amount being a remaining amount of electric power accumulated in the battery, wherein
the controller performs switching from the sleep state to the wake-up state of each of the plurality of radio terminals, according to a communication order of the radio terminal, the communication order being an order where the radio terminal performs radio communication, and
the communication order is scheduled based on the remaining battery amount.
